(19) Europäisches Patentamt

European Patent Office

Office européen des brevets

(11) EP 1 547 981 A2

(12) EUROPEAN PATENT APPLICATION

(43) Date of publication:
29.06.2005 Bulletin 2005/26

(51) Int Cl.7: C03B 37/014

(21) Application number: 04029667.5

(22) Date of filing: 15.12.2004

(84) Designated Contracting States:
AT BE BG CH CY CZ DE DK EE ES FI FR GB GR HU IE IS IT LI LT LU MC NL PL PT RO SE SI SK TR
Designated Extension States:
AL BA HR LV MK YU

(30) Priority: 25.12.2003 JP 2003429628

(71) Applicant: SUMITOMO ELECTRIC INDUSTRIES, Ltd
Osaka-shi, Osaka 541-0041 (JP)

(72) Inventors:
• Sasaki, Takashi Yokohama Works
  Yokohama-shi Kanagawa (JP)
• Ishikawa, Shinji Yokohama Works
  Yokohama-shi Kanagawa (JP)
• Taru, Toshiki Yokohama Works
  Yokohama-shi Kanagawa (JP)

(74) Representative: HOFFMANN - EITLE
Patent- und Rechtsanwälte
Arabellastrasse 4
81925 München (DE)

(54) **Method of manufacturing fluorine doped silica glass article, preform and optical fiber and optical fiber made by the method**

(57) Provided are an optical fiber which exhibits a small increment of loss due to the OH group and which is suitable for transmitting signals in a band including a wavelength of 1,380 nm, and methods for manufacturing such optical fiber, an optical fiber preform, and a fluorine doped silica glass article. The fluorine doped silica glass article is produced by (1) depositing silica glass soot on a starting substrate to produce a silica glass soot deposit body and (2) heating the silica glass soot deposit body in an atmosphere including at least a first gas containing fluorine atoms and a second gas having deoxidizing property and containing no fluorine atom nor hydrogen atom. An optical fiber preform and an optical fiber are produced by the use of this glass body. The optical fiber has a clad containing fluorine and exhibits a transmission loss of 0.32 dB/km or less at a wavelength of 1,380 nm.

FIG. 1

**Description**

BACKGROUND OF THE INVENTION

1. Field of the Invention

The present invention relates to methods of manufacturing fluorine doped silica glass articles and methods of manufacturing optical fiber preforms and optical fibers using such methods, and to optical fibers made by such methods.

2. Description of the Related Art

The optical transmission system using an optical fiber enables high speed transmission and reception of a large amount of information. In a wavelength division multiplexing (WDM) optical transmission system a plurality of signals having different wavelengths are multiplexed so as to be transmitted in one optical fiber, and thereby greater volume of information can be transmitted and received by the use of one optical fiber. The optical transmission system is required to have a larger capacity, and it is attempted to reduce the wavelength interval between signals and to extend the wavelength band of the multi-wavelength signal light.

With respect to the extension of the wavelength band, not only the use of the C band (1,530 nm to 1,565 nm), but also the use of the L band (1,565 nm to 1,625 nm) and the U band (1,625 nm to 1,675 nm), which include wavelengths longer than those of the C band, and the use of the O band (1,260 nm to 1,360 nm), the E band (1,360 nm to 1,460 nm), and the S band (1,460 nm to 1,530 nm), which include wavelengths shorter than those of the C band, have been researched. Optical fibers serving to transmit signals in such a broad wavelength band are required to have a small transmission loss over the entire wavelength band. In optical fibers made of primarily silica glass, the minimum transmission loss is in the neighborhood of a wavelength of 1,550 nm in the C band, and the absorption peak due to the hydroxyl group (OH group) is in a 1,385 nm wavelength band.

The optical fiber described in the 1986 IECE General Conference Report, 1091 "Loss Characteristics of Ultra-Low-Loss Pure-Silica-Core Single-Mode Fiber" by H. Yokota et al. has a transmission loss of 0.154 dB/km at a wavelength of 1,550 nm, a transmission loss of 0.291 dB/km at a wavelength of 1,300 nm, and an increment of loss due to the OH group of 0.75 dB/km at a wavelength of 1,380 nm. This optical fiber, which has a pure silica core and fluorine doped silica cladding, has a lower transmission loss compared with a standard single mode fiber having germanium oxide doped core. The optical fiber disclosed in US Patent No. 6,449,415 has a transmission loss of 0.170 to 0.173 dB/km at a wavelength of 1,550 nm, and an increment of loss due to the OH group of 0.3 dB/km at a wavelength of 1,380 nm.

As for a technology for reducing an increment of loss due to the OH group, US Patent No. 3,933,454 discloses a technology in which dehydration is performed by the use of a chlorine ($Cl_2$) gas in the step of producing an optical fiber preform from a silica glass soot deposit body. Furthermore, a technology in which sulfur hexafluoride and $Cl_2$ are mixed in the step of addition of fluorine is disclosed in Japanese Examined Patent Application Publication No. 62-38292.

Since wavelengths in the neighborhood of 1,380 nm are required to be used also for the transmission of signals, a technology of further reducing the increment of loss due to the OH group is required. Occasionally, excitation light near the wavelength of 1,380 nm must be transmitted through the fiber as in a Raman amplification technology. In this case, if the loss in a 1,380 nm band is large, the optical fiber must be provided with a high intensity excitation light, which is not cost-effective.

The optical fiber disclosed in the above-described document by Yokota, et al. is preferable from the viewpoint of a small transmission loss at a wavelength of 1,380 nm. However, the increment of loss due to the OH group at a wavelength of 1,300 nm is large and, therefore, this optical fiber is unsuitable for the transmission of signals in a wavelength band including a wavelength of 1,380 nm. The reduction of the increment of loss due to the OH group is not adequate in the technologies described in US Patent No. 3,933,454 and Japanese Examined Patent Application Publication No. 62-38292.

SUMMARY OF THE INVENTION

It is an object of the present invention to provide an optical fiber which exhibits a small increment of loss due to the OH group and which is suitable for transmitting signals in a band including a wavelength of 1,380 nm, a method of manufacturing this optical fiber, and a method of manufacturing an optical fiber preform and a fluorine doped silica glass article to be used for the optical fiber.

In order to achieve such object, a method of manufacturing a fluorine doped silica glass article is provided, wherein the method includes the following steps: (1) depositing silica glass soot on a starting substrate so as to produce a silica glass soot deposit body and (2) heating the silica glass soot deposit body in an atmosphere which includes at least a first gas containing fluorine atoms and a second gas having deoxidizing property and containing no fluorine atom nor hydrogen atom. Here, the second gas having "deoxidizing property" means that the second gas reacts with oxygen ($O_2$) in the atmosphere at a temperature of the heating of the deposit body.

The second gas may be a chloride of a nonmetallic element. The first gas may be one selected from the group consisting of silicon tetrafluoride ($SiF_4$), disilicon hexafluoride ($Si_2F_6$), chlorofluorocarbon, sulfur hexafluoride, nitrogen trifluoride ($NF_3$), and fluorine ($F_2$). The second gas may be one selected from the group consisting of silicon halides other than silicon fluoride, boron trichloride ($BCl_3$), carbon tetrachloride ($CCl_4$), germanium tetrachloride ($GeCl_4$), nitrogen ($N_2$), and sulfur.

The total sum of concentrations of deoxidizing substances containing no fluorine atom nor hydrogen atom may be 0.01 percent by volume or more and 10 percent by volume or less relative to the entire atmosphere. The first gas may be $SiF_4$, the second gas may be silicon tetrachloride ($SiCl_4$), and the concentration of $SiCl_4$ may be 0.01 percent by volume or more and 10 percent by volume or less, or be 1 percent by volume or more and 10 percent by volume or less. The concentration of oxygen ($O_2$) in the atmosphere may be 20 ppm by volume or less, or be 10 ppm by volume or less. At least a part of the heating of the silica glass soot deposit body may be performed in an atmosphere at 1,400°C or more.

Furthermore, a method of manufacturing an optical fiber preform is provided, wherein the fluorine doped silica glass article produced by a method according to the present invention is processed into a glass pipe and a separately prepared glass rod is inserted into the glass pipe, followed by a step of unifying them.

Furthermore, a method of manufacturing an optical fiber is provided, wherein the method includes the step of drawing the optical fiber preform produced by the method of manufacturing an optical fiber preform, according to the present invention. Alternatively, a method of manufacturing an optical fiber is provided, wherein the fluorine doped silica glass article produced by the method according to the present invention is processed into a glass pipe and a separately prepared glass rod is inserted into the glass pipe, followed by a step of simultaneously unifying and drawing them.

In addition, an optical fiber including a core and a clad is provided, wherein the clad contains fluorine, and the transmission loss is 0.32 dB/km or less at a wavelength of 1,380 nm. The clad may contain 0.5 percent by weight or more of fluorine and 0.1 percent by weight or more of chlorine.

BRIEF DESCRIPTION OF THE DRAWINGS

The present invention is illustrated by way of example, and not by way of limitation, in the figures of the accompanying drawings in which like reference numerals refer to similar elements.

Figure 1 is a graph in which the amount of water remaining in a fluorine doped silica glass article and the increment of loss due to absorption by the hydroxyl group (OH group) in an optical fiber made using the fluorine doped silica glass article as the cladding are plotted with respect to each atmosphere for heating the respective silica glass soot deposit body.

Figures 2A and 2B are graphs showing the fluorine concentration and the chlorine (Cl) concentration, respectively, obtained with an electron probe microanalysis (EPMA) versus the respective position on a diameter of a cross section of an optical fiber preform produced by the method of manufacturing. an optical fiber preform, according to the present invention.

Figures 3A and 3B are graphs showing the fluorine concentration and the Cl concentration, respectively, obtained with an EPMA versus the respective position on a diameter of a cross section of an optical fiber preform produced by a conventional manufacturing method.

Figure 4 is a graph showing the relationship between the average Cl concentration in a clad and the increment of loss due to the absorption by the OH group in an optical fiber preform produced by the method of manufacturing an optical fiber preform, according to the present invention, wherein silicon tetrachloride ($SiCl_4$) is used as the second gas.

Figure 5A is a sectional view of an optical fiber produced by the method of manufacturing an optical fiber, according to the present invention. Figure 5B is a schematic diagram showing the refractive index profile of this optical fiber.

Figures 6A to 6D are schematic diagrams that illustrate an embodiment of the method of the present invention for manufacturing an optical fiber.

Figure 7 is a graph plotting the relationship between the concentration of $SiCl_4$ contained in a heating atmosphere and the increment of loss due to the absorption by the OH group in an optical fiber made using a fluorine doped silica glass article produced in the heating atmosphere.

Figure 8 is a graph plotting the relationship between the concentration of oxygen contained in a heating atmosphere and the increment of loss due to the absorption by the OH group in an optical fiber made using a fluorine doped silica glass article produced in the heating atmosphere.

Figure 9 is a schematic diagram showing the manner of heating of a silica glass soot deposit body connected to a starting rod in a furnace muffle tube.

DESCRIPTION OF THE PREFERRED EMBODIMENTS

In the present specification, the "soot method" refers to any method, including a powder molding method, a sol-gel method, and a method using vapor phase reaction such as a VAD method and an OVD method, provided that a glass soot deposit body is formed and thereafter the glass soot deposit body is consolidated so as to produce a glass article.

In the production of a fluorine doped silica glass article by the use of the soot method, usually, after a step of depositing glass soot, a gas to dehydrate, e.g., chlorine ($Cl_2$), is fed. When the dehydration is performed adequately, the gas is switched to a fluorination gas. In contrast to this conventional method, the inventors of the present invention found that the water ($H_2O$) which has entered the atmosphere for heating the silica glass soot deposit body as a result of the entry of air through the joint of a furnace muffle tube, for example, and which may remain in a fluorine added glass article can be removed by feeding a deoxidizing gas containing no fluorine atom nor hydrogen atom with a fluorine containing gas during the addition of fluorine, and that the increment of loss due to the hydroxyl group (OH group) in the resulting optical fiber can accordingly be further reduced.

According to one aspect of the present invention, a method of manufacturing a fluorine doped silica glass article includes the following steps: (1) depositing silica glass soot on a starting substrate so as to produce a silica glass soot deposit body and (2) heating, during the addition of fluorine, the silica glass soot deposit body in an atmosphere including at least a first gas containing fluorine atoms and a second gas having deoxidizing property and containing no fluorine atom nor hydrogen atom.

In the above-described manufacturing method, the first gas is a substance capable of adding fluorine. Preferably the first gas is at least one selected from the group consisting of silicon tetrafluoride ($SiF_4$), disilicon hexafluoride, chlorofluorocarbon, sulfur hexafluoride, nitrogen trifluoride, and fluorine ($F_2$), and more preferably is $SiF_4$. It is essential that the first gas is a substance to which fluorine is added, and the gas concentration is controlled at a concentration required to achieve a desired relative refractive index difference. It is essential that the second gas is a gaseous raw material which oxidizes by being heated at a temperature of 2,300°C or less at which glass is softened. Preferably, the second gas is a chloride of a nonmetallic element, and preferably, the second gas is at least one selected from the group consisting of silicon halides other than silicon fluoride, boron trichloride, carbon tetrachloride, germanium tetrachloride, nitrogen ($N_2$), and sulfur. Examples of silicon halides other than silicon fluoride include compounds containing Cl, Br, and I, e.g., silicon tetrachloride, silicon tetraiodide, silicon tetrabromide, and disilicon hexachloride. Among them, $SiCl_4$ is an easy-to-use raw material since a material containing a low content of hydrogen compound is readily available as a raw material for CVD.

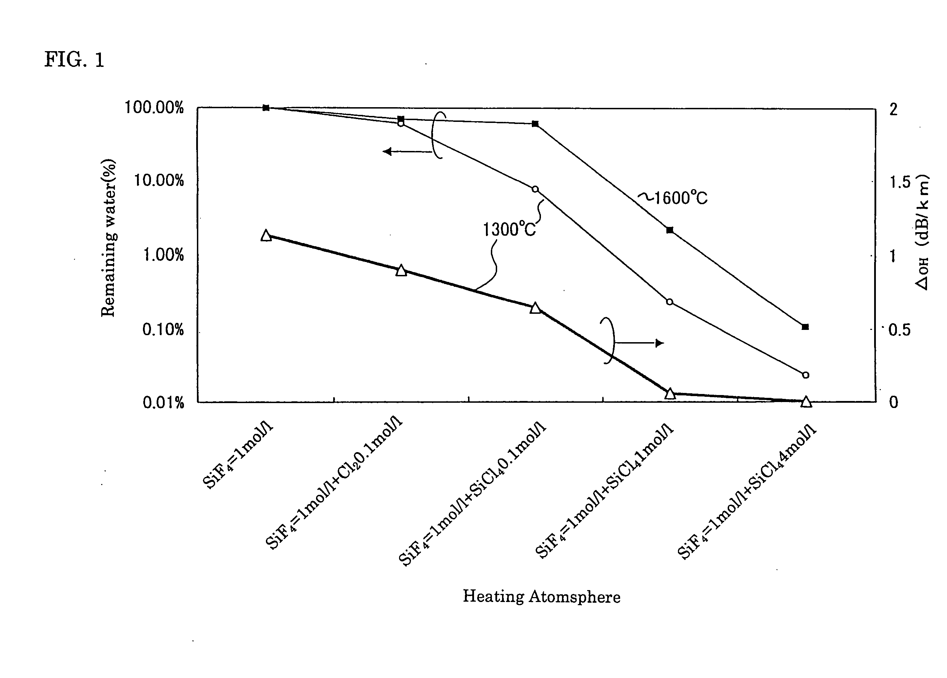

The reason why the heating is preferably performed with the gas containing no fluorine atom nor hydrogen atom will be described with reference to Fig. 1, using an example relating to $SiCl_4$. Figure 1 is a graph in which the amount of water ($H_2O$) remaining in a fluorine doped silica glass article and the increment of loss due to absorption by the OH group in an optical fiber made using a fluorine doped silica glass article are plotted with respect to the respective atmosphere for heating the silica glass soot deposit body. In Fig. 1, ■ and ○ indicate calculated values of the amounts of water ($H_2O$) remaining in fluorine doped silica glass articles when the deposit bodies were heated at 1,600°C and 1,300°C, respectively, in atmospheres containing 0.1 mol/liter of $H_2O$. Likewise, $\triangle$ indicates a calculated value of the increment of loss due to absorption by the OH group in an optical fiber made using a fluorine doped silica glass article in a case where the deposit body was heated in the atmosphere of 1,300°C.

When $Cl_2$ is added to the heating atmosphere including water, the following reaction occurs.

$$Cl_2 + H_2O \leftrightarrow 2HCl + 1/2O_2 \qquad (1)$$

This reaction proceeds leftward with increasing oxygen ($O_2$) concentration. Consequently, in an atmosphere containing a large amount of oxygen, a partial pressure of $H_2O$ cannot be decreased expectedly even when $Cl_2$ is added. On the other hand, when $SiCl_4$ is added to the heating atmosphere including water, the following two reactions occur simultaneously.

$$SiCl_4 + H_2O \rightarrow SiO_2 + 4HCl \qquad (2)$$

$$SiCl_4 + O_2 \rightarrow SiO_2 + Cl_2 \tag{3}$$

Since a reaction that consumes $O_2$ proceeds simultaneously with the dehydration reaction, the equilibrium of the reaction represented by Formula (1) can be shifted rightward and, thereby, the amount of residual $H_2O$ can be reduced. Since the generated $SiO_2$ itself becomes a part of the glass deposit body, this is particularly preferable. As described above, the mixing of $SiCl_4$ exerts a significant effect on the reduction of the partial pressure of $H_2O$. As is clear from Fig. 1, when the amount of $SiCl_4$ is made to be 10 times the partial pressure of $H_2O$, the amount of residual water can be reduced to about 0.2% of that in the case of $SiF_4$ alone. As a matter of course, $SiF_4$ also reacts with $H_2O$. However, the resulting HF readily reacts with $SiO_2$ to regenerate $H_2O$ during the reaction according to the following formula:

$$4HF + SiO_2 \rightarrow SiF_4 + 2H_2O \tag{4}$$

and, therefore, it is difficult to reduce the amount of OH groups compared with that in the case where $SiCl_4$ is mixed.

In consideration of the above-described reason as well, it is desirable that the total sum of concentrations of deoxidizing substances containing no fluorine atom nor hydrogen atom be 0.01 percent by volume or more and 10 percent by volume or less relative to the entire atmosphere in the above-described manufacturing method. Preferably, the first gas is $SiF_4$, the second gas is $SiCl_4$, and the concentration of $SiCl_4$ is 0.01 percent by volume or more and 10 percent by volume or less, or is 1 percent by volume or more and 10 percent by volume or less. By controlling the concentration within these ranges, $H_2O$ or a Hydrogen donor which enters from the outside in the step of heating the silica glass soot deposit body and $H_2O$ remaining in the glass can be removed adequately.

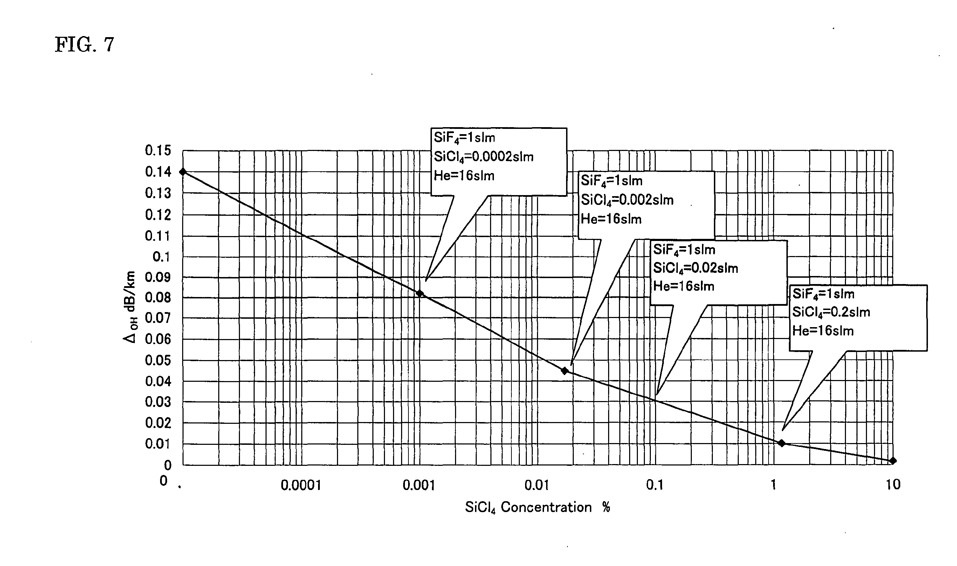

Figure 7 is a graph plotting the relationship between the concentration of $SiCl_4$ contained in a heating atmosphere and the increment of loss due to the absorption by the OH group in an optical fiber made using a fluorine doped silica glass article produced in the heating atmosphere. When the concentration of $SiCl_4$ is 0.01% or more relative to the entire atmosphere, the increment of loss can be reduced to 0.05 dB/km or less in accordance with International Telecommunications Union (ITU-T) Recommendation G.652.D (Recommendation G.652.D requires that the optical loss at $\lambda$ = 1.38 $\mu$m of the optical fiber after being exposed to hydrogen be less than or equal to the optical attenuation at $\lambda$ = 1.31 $\mu$m prior to the hydrogen exposure. Although depending on types of optical fiber, the difference between the value, about 0.245 dB/km, of Rayleigh scattering loss at a wavelength of 1.38 $\mu$m and the value, about 0.295 dB/km, at a wavelength of 1.31 $\mu$m is 0.05 dB/km).

To control the total sum of concentrations of deoxidizing substances containing no fluorine atom nor hydrogen atom as described above is particularly effective when the deposit body is heated in an atmosphere in which the pressure in the furnace is adjusted to less than or equal to the outside pressure in order to prevent harmful gases, e. g., $Cl_2$ or $SiF_4$, from leaking to the outside of the furnace muffle tube. Likewise, this is also effective in the case where the $O_2$ concentration in a gas fed into the heating atmosphere is as high as 10 ppm by volume or more.

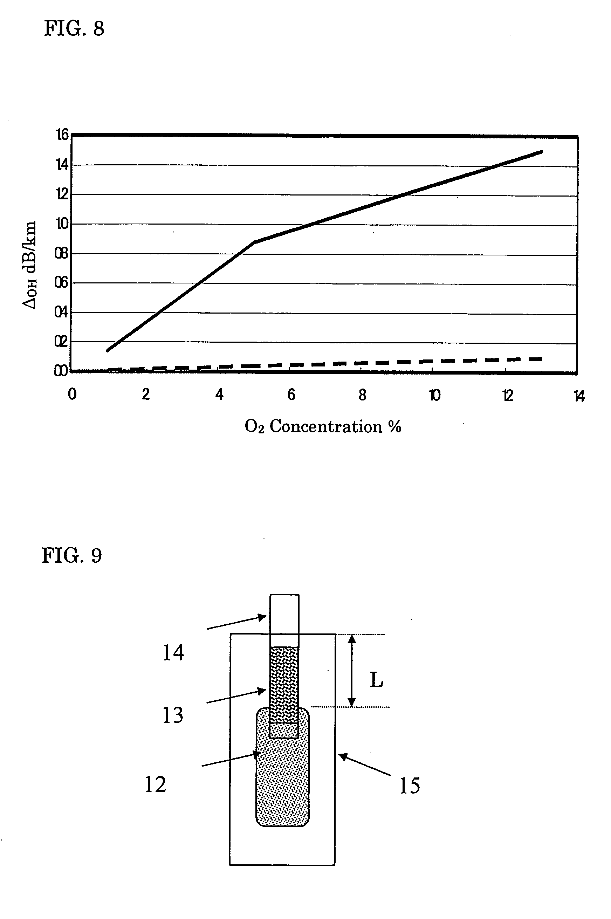

Figure 8 is a graph plotting the relationship between the concentration of oxygen contained in a heating atmosphere and the increment of loss due to the absorption by the OH group in an optical fiber made using a fluorine doped silica glass article produced in the heating atmosphere. In Fig. 8, the broken line indicates the case where the production is performed in a heating atmosphere containing 1.1 percent by volume of $SiCl_4$, and the solid line indicates the case where the production is performed in a heating atmosphere containing no $SiCl_4$. The numeric values of the graph in Fig. 8 are shown in Table I.

Table I

| $SiCl_4$ Concentration percent by volume | $O_2$ Concentration percent by volume | Increment of loss due to absorption by OH group dB/km |
|---|---|---|
| 1.1 | 1 | 0.009 |
| 1.1 | 5 | 0.039 |
| 1.1 | 13 | 0.098 |
| 0 | 1 | 0.055 |
| 0 | 5 | 0.180 |
| 0 | 13 | 1.050 |

Since $SiCl_4$ is present simultaneously with $SiF_4$, the increment of loss due to absorption by the OH group can be reduced even in the case where the $O_2$ concentration in the heating atmosphere is high. An inert gas, e.g., helium, may be added to the heating atmosphere, and by adjusting the ratio of partial pressure of the first gas, a desired relative refractive index difference can be achieved as well..

The temperature of the atmosphere for heating the silica glass soot deposit body is preferably 800°C to 1,700°C. By controlling the temperature within this range, the activity of chlorine is increased, and the dehydration can be performed efficiently without a wastage of the furnace muffle tube. Preferably, at least a part of the heating of the deposit body is performed in an atmosphere at 1,400°C or more. In this manner, the silica glass soot deposit body can be made transparent.

Since OH group may permeate into the heating atmosphere from the outside of a furnace muffle tube, attention should be given to the muffle tube as well. Table II provides a summary of thicknesses of muffle tubes used for consolidating the silica glass soot deposit bodies and increments of loss due to the absorption by the OH group of optical fibers produced by the use of the silica glass soot deposit bodies. In order to achieve an optical fiber exhibiting a small increment of loss due to the absorption by the OH group, the thickness of the muffle tube must be 3 mm or more, and preferably is 5 mm or more.

Table II

| Case | Thickness mm | Strength and resistance | Increment of loss due to absorption by OH group dB/km |
|------|-------------|------------------------|-------------------------------------------------------|
| 1 | 1 | Poor | 0.5 |
| 2 | 3 | Good | 0.07 |
| 3 | 5 | Good | 0.017 |

The furnace muffle tube to be used should be made of synthetic quartz glass having an impurity content of 1 ppm by weight or less. By the use of a high purity quartz muffle tube, OH donors can be prevented from transpiring into the inside of the muffle tube. In order to reduce OH group in the consolidated glass article, attention should be given to the starting substrate to support the silica glass soot deposit body as well. US Patent No. 6,477,305 refers to the quality of material of a plug. However, attention should also be given to points other than the material, in addition to the quality of material of a starting substrate.

Figure 9 is a schematic diagram showing the manner of heating of a silica glass soot deposit body 12 connected to a starting rod in a furnace muffle tube 15. The starting rod is made of fused quartz throughout its length, or as is shown in Fig. 9, a synthetic quartz starting rod 13 and a fused quartz starting rod 14 are connected. Table III provides a summary of materials of starting rods, lengths L of starting rods in the muffle tube, proportions of synthetic starting rods in the muffle tube, and increments of loss due to the absorption by the OH group of optical fibers produced in respective cases.

Table III

| Material of starting rod | L mm | Proportion of synthetic starting rod % | Increments of loss due to absorption by OH group dB/km |
|--------------------------|------|----------------------------------------|--------------------------------------------------------|
| Synthetic quartz, low-OH type (OH content 0.05 ppm by weight) | 100 | 100 | 0.004 |
| | | 30 | 0.017 |
| | 500 | 100 | 0.0038 |
| | | 90 | 0.012 |
| | 800 | 100 | 0.0041 |
| | | 95 | 0.009 |
| Synthetic quartz, regular type (OH content 0.8 ppm by weight) | 100 | 100 | 0.037 |
| | | 30 | 0.16 |
| | 500 | 100 | 0.038 |
| | | 90 | 0.17 |
| | 800 | 100 | 0.044 |
| | | 95 | 0.1 |

Table III   (continued)

| Material of starting rod | L mm | Proportion of synthetic starting rod % | Increments of loss due to absorption by OH group dB/km |
|---|---|---|---|
| Fused quartz starting rod (OH content 100 ppm by weight) | 100 | 0 | 0.22 |
| | 500 | 0 | 0.28 |
| | 800 | 0 | 0.31 |

It is concluded that the loss due to the absorption by the OH group can be reduced when the synthetic quartz starting rod is used for even a part of the starting rod in the muffle tube, and that the loss due to the absorption by the OH group can be reduced when the length of the starting rod in the muffle tube is decreased. This is because OH donor contained in the rod is released to the outside while being heated inside the furnace muffle tube.

According to another aspect of the present invention, a method of manufacturing an optical fiber preform includes the steps of processing the fluorine doped silica glass article produced by a method of the present invention into a glass pipe and inserting a separately prepared glass rod into the glass pipe so as to unify them. In the method of manufacturing an optical fiber preform, the fluorine doped silica glass article produced by the method of manufacturing a fluorine doped silica glass article, according to the present invention, is made into the shape of a rod, and the resulting rod is made into the shape of a pipe by, for example, machining with a diamond tool or hot processing. A separately prepared glass rod to become a core is inserted into the resulting pipe, followed by unifying them, and thereby, a silica glass article including the core and a clad can be produced. The resulting silica glass article may be subjected to elongation, further addition of a clad layer (attachment of a jacket), etching, flame polishing, peripheral polishing, and the like, so that an optical fiber preform can be produced. A deoxidizing gas containing no fluorine atom nor hydrogen atom may also be included in the atmosphere in the inside of the pipe during unifying.

Preferably, the jacket is attached by a soot method, and a first gas and a second gas are used in the step of heating the silica glass soot deposit body so as to form the jacket portion containing a small amount of OH group. Preferable compositions and concentrations of the first gas and the second gas, a preferable heating temperature, and the like are similar to those in the above-described method of manufacturing a fluorine doped silica glass article.

A method of manufacturing an optical fiber, according to another aspect of the present invention, includes the step of drawing the optical fiber preform produced by the method of manufacturing an optical fiber preform, according to the present invention. Alternatively, a method of manufacturing an optical fiber, according to another aspect of the present invention, includes the steps of processing the fluorine doped silica glass article produced by the method of manufacturing a fluorine doped silica glass article, according to the present invention, into a glass pipe and inserting a separately prepared glass rod including a portion to become a core into the glass pipe, followed by simultaneously unifying and drawing them.

An optical fiber according to another aspect of the present invention includes a core and a clad, wherein the clad contains fluorine, and since the amount of OH group contained in the clad is small, the increment of transmission loss due to the OH group is reduced, and the transmission loss is very low: 0.32 dB/km or less at a wavelength of 1,380 nm. The clad may contain 0.5 percent by weight or more of fluorine and 0.1 percent by weight or more of chlorine (Cl).

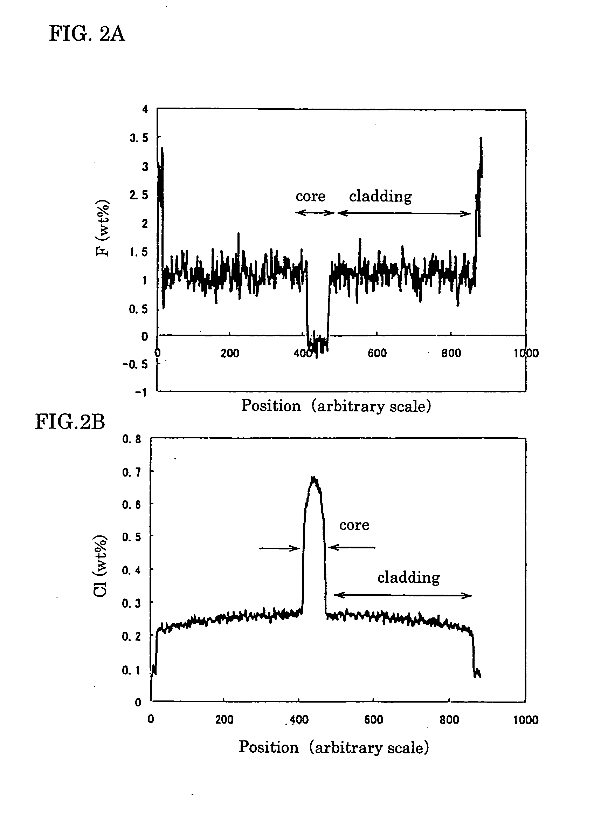

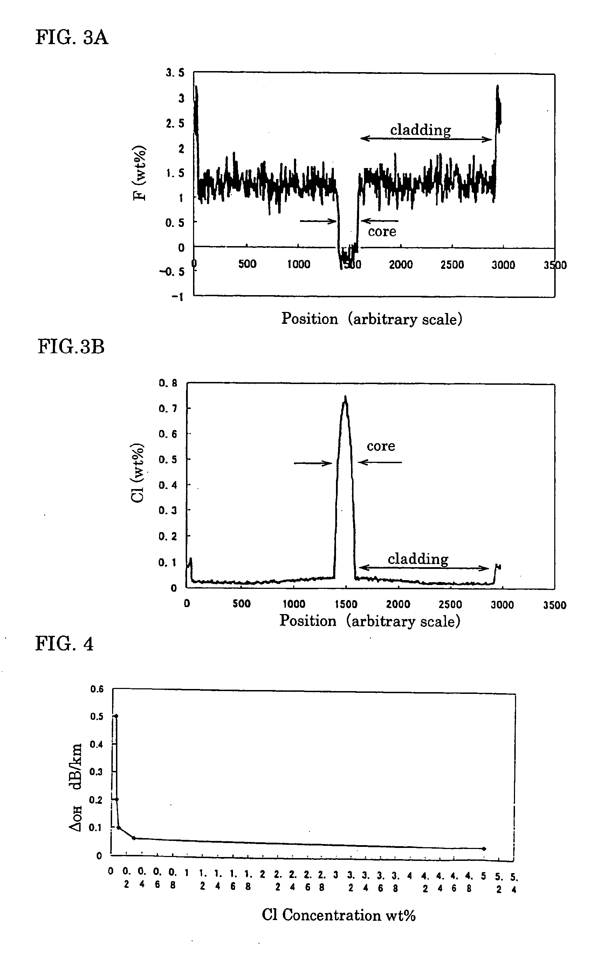

The fluorine doped silica glass article and the clad layers of the optical fiber preform and optical fiber according to the present invention are different from those produced by the known method in that they contain an element included in the deoxidizing substance, e.g., $SiCl_4$, which is contained in the second gas fed during the addition of fluorine. Figures 2A and 2B are graphs showing the fluorine content and the Cl content, respectively, obtained with EPMA versus the position on a diameter of a cross section of an optical fiber preform produced by the method of manufacturing an optical fiber preform, according to the present invention. Figures 3A and 3B are graphs showing the fluorine content and the Cl content, respectively, obtained with EPMA versus the position on a diameter of a cross section of an optical fiber preform produced by a known manufacturing method. The deoxidizing substance used in the second gas was $SiCl_4$ and the concentration was 4 percent by volume in the heating atmosphere. Clearly the Cl content in the clad layer of the optical fiber preform produced by the method of manufacturing an optical fiber preform, according to the present invention, is significantly larger than that of the optical fiber preform produced by the known method.

Figure 4 is a graph showing the relationship between the average Cl concentration in a clad and the increment of loss due to the absorption by the OH group in an optical fiber preform produced by the method of manufacturing an optical fiber preform, according to the present invention, wherein $SiCl_4$ is used as the second gas. It is clear that $\Delta_{OH}$ is significantly reduced when the average Cl concentration is 0.1 percent by weight or more.

Example 1

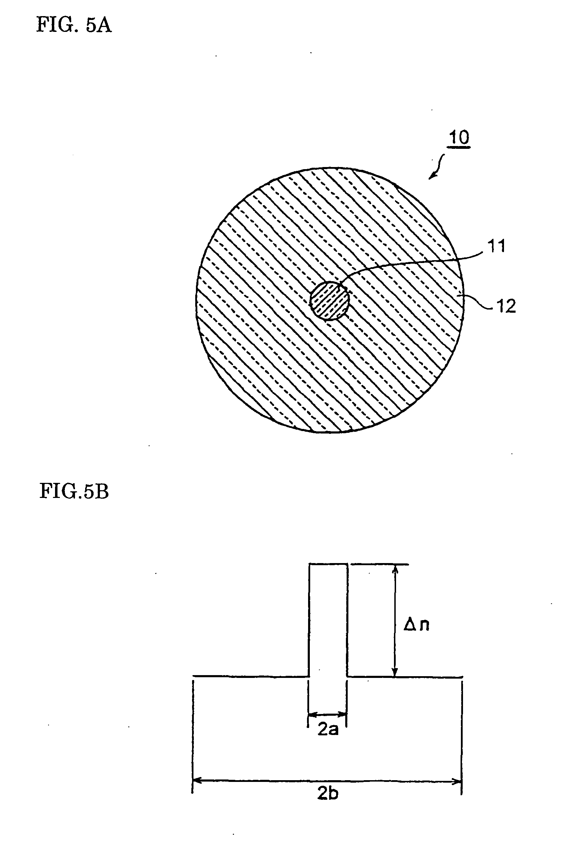

Figure 5A is a sectional view of an optical fiber produced by the method of manufacturing an optical fiber, according to the present invention. Figure 5B is a schematic diagram showing the refractive index profile of this optical fiber. A core region 11 of this optical fiber 10 is made of pure silica glass, and a clad region 12 is made of fluorine doped silica glass. In Example 1, the outer diameter 2a of the core region 11 is 8.6 $\mu$m, the outer diameter 2b of the clad region 12 is 125 $\mu$m, and the relative refractive index difference $\Delta$n of the core region 11 is 0.3% with reference to the refractive index of the clad region 12.

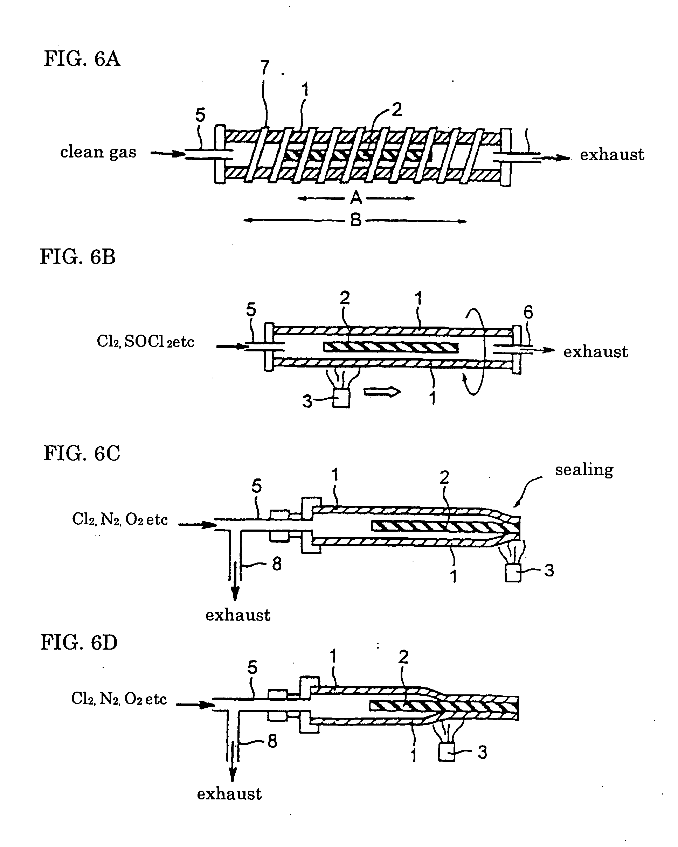

Figures 6A to 6D are schematic diagrams that illustrate an embodiment of the method of manufacturing an optical fiber, according to the present invention. A high-purity silica glass rod (the relative refractive index difference is 0.03% with reference to pure quartz) is synthesized by a VAD method. This glass rod is elongated in a furnace at a temperature of about 1,800°C, so that a glass rod 2 having an outer diameter of 3 mm and a length of 50 cm is prepared. A glass pipe 1 made of fluorine doped silica glass having a relative refractive index difference of -0.3% with reference to pure silica glass is prepared by the VAD method. In the preparation of the glass pipe 1, a silica glass soot deposit body is produced by the VAD method, and the deposit body is moved in a major axis direction at 10 mm/min in a zone furnace controlled at 1,250°C so as to be dehydrated while 16 standard liter/min (slm) of He and 400 standard cc/min (sccm) of $SiCl_4$ (the flow rate of a carrier He gas is 1 slm) are fed, and, as a step of heating the silica glass soot deposit body, is moved in a major axis direction at 40 mm/min in a zone furnace controlled at 1,590°C while 16 slm of He, 400 sccm of $SiCl_4$ (the flow rate of a carrier He gas is 1 slm), and 1 slm of $SiF_4$ are fed. The resulting rod may be annealed at a temperature over 800 °C to purge gas from it. A hole is made in the center of the rod, and elongation is performed, so that a glass pipe 1 having an outer diameter of 20 mm and an inner diameter of 4 mm is produced. The pipe may be produced by opening the hole in the rod after the rod is drawn.

As shown in Fig. 6A, the glass rod 2 is inserted into the glass pipe 1. The pressure in the inside of the glass pipe 1 is controlled at 2.5 kPa while clean $N_2$ (the content of $H_2O$ is 0.5 ppm by volume or less and the content of other H-containing gases is 0.1 ppm by volume or less) is fed at a flow rate of 2,000 sccm from a pipe 5 at a first end side of the glass pipe 1 into the glass pipe 1 and is vacuum-exhausted from a pipe 6 at a second end side of the glass pipe 1. At this time, the range B, which includes the range A and 200 mm length area on both sides of the range A of each of the glass pipe 1 and the glass rod 2, is heated to a temperature of 200°C with a tape heater 7. The range A is heated to a temperature of 450°C or less in each of the subsequent steps of removing impurities, sealing, and unifying. The heating range B is determined to include the range that is heated to a temperature of 450°C or less in the subsequent step of unifying. This state is maintained for 4 hours, and the above-described clean $N_2$ is blown into the pipe and is exhausted.

Subsequently, as shown in Fig. 6B, a gas ($Cl_2$, $SOCl_2$, etc.) capable of removing metal impurities is introduced from the pipe 5 at the first end side of the glass pipe 1 into the glass pipe 1, and the glass pipe 1 and the glass rod 2 are heated to a temperature of 1,150°C with a heat source 3, so that metal impurities adhering to the inner wall surface of the glass pipe 1 and the surface of the glass rod 2 are removed.

Furthermore, as shown in Fig. 6C, the second end side of the glass pipe 1 is heat-melted with the heat source 3, so that the glass pipe 1 and the glass rod 2 are fused and, thereby, the glass pipe 1 is sealed. After the sealing is completed, as shown in Fig. 6C, the inside of the glass pipe 1 is decompressed to become a vacuum state at a pressure of 0.01 kPa or less with a vacuum pump through a gas line 8 serving as an exhaust pipe. Thereafter, clean $N_2$ is introduced from the pipe 5 at the first end side of the glass pipe 1 into the glass pipe 1, the vacuum pump is stopped, and the inside of the glass pipe 1 is pressurized to a pressure of 105 kPa. This cycle of decompression and pressurization is repeated three times, so that gases (primarily containing $H_2O$) adsorbed on the inner wall surface of the glass pipe 1 and the surface of the glass rod 2 are desorbed.

As shown in Fig. 6D, according to a rod-in unifying method, the glass pipe 1 and the glass rod 2 are heat-melted and fused by moving the heat source 3 sequentially from the second end side of the glass pipe 1 toward the first end side so that they are unified into a solid glass article. At this time, 500 sccm of $Cl_2$ gas or 500 sccm of clean $O_2$ gas is introduced into the inside of the glass pipe 1. The pressure of the inside of the glass pipe 1 is -1 kPa on a absolute pressure basis, and the temperature of the outer surface of the glass pipe 1 is 1,600°C during the unifying. In this manner, a first glass article is prepared.

This first glass article has an outer diameter of 19 mm and a length of 400 mm, and the ratio of the clad diameter to the core is 6.6. Furthermore, the first glass article is elongated to prepare a first preform having an outer diameter of 14 mm. Fine particles of $SiO_2$ produced by introducing $SiCl_4$ into the oxyhydrogen flame are deposited on the perimeter surface of this first preform having an outer diameter of 14 mm. The resulting deposit body is placed in a furnace, and is heated to a temperature of 800°C. The temperature of the furnace is raised to 1,500°C at a temperature rising rate of 3.3°C/min. During this period, 16 slm of He, 400 sccm of $SiCl_4$ (the flow rate of a carrier He gas is 1 slm), and 1 slm of $SiF_4$ are introduced into the furnace. In this manner, a jacket having a relative refractive index difference of -0.33% is synthesized. An optical fiber preform is produced as described above. The flaw rate of $SiCl_4$ can be

changed depending on a ratio of the diameter of the preform to that of the first preform. Subsequently, elongation and flame polishing are performed, and the resulting preform has an outer diameter of 43 mm and a core diameter of about 2.8 mm. This preform is drawn and, thereby, an optical fiber of Example 1 is produced.

The transmission loss of this optical fiber is 0.295 dB/km at a wavelength of 1,380 nm, including a transmission loss of 0.031 dB/km due to the OH group. The transmission loss thereof at a wavelength of 1,550 nm is 0.170 dB/km, and the cutoff wavelength is 1.285 $\mu$m. The optical fiber is kept in an atmosphere of 100% hydrogen at 80°C for 20 hours and, thereafter, an increase in absorption due to the OH group at a wavelength of 1,380 is examined. The resulting value is as small as 0.002 dB/km.

Example 2

In Example 2 as well, an optical fiber shown in Fig. 5A is produced. In Example 2, the outer diameter 2a of the core region 11 is 8.3 $\mu$m, the outer diameter 2b of the clad region 12 is 125 $\mu$m, and the relative refractive index difference $\Delta$n of the core region 11 is 0.36% with reference to the clad region 12.

A glass rod 2 is prepared in a manner similar to that in Example 1, and a glass pipe 1 composed of fluorine doped silica glass is prepared by the following method. That is, a silica glass soot deposit body is produced by the VAD method. Thereafter, the resulting deposit body is held for 1 hour in a uniform heating furnace controlled at 1,250°C so as to be dehydrated while 16 slm of He and 40 sccm of $SiCl_4$ (the flow rate of a carrier He gas is 100 sccm) are fed, and, as a step of heating the silica glass soot deposit body, is held for 1 hour in a furnace controlled at 1,590°C while 16 slm of He, 40 sccm of $SiCl_4$, and 1 slm of $SiF_4$ (the flow rate of a carrier He gas is 100 sccm) are fed. A hole is made in the resulting rod, and elongation is performed, so that a glass pipe 1 having an outer diameter of 20 mm, an inner diameter of 6 mm, and a relative refractive index difference of -0.36% with reference to pure silica glass is produced.

The remainder of the procedure is conducted as in Example 1, so that a first glass article having an outer diameter of 19 mm and a length of 400 mm is prepared. The first glass article is elongated to have an outer diameter of 14 mm, and fine particles of $SiO_2$ produced by introducing $SiCl_4$ into the oxyhydrogen flame are deposited on the perimeter surface of the first glass article. The resulting deposit body is placed in a furnace, and is heated to a temperature of 800°C. The temperature of the furnace is raised to 1,500°C at a temperature rising rate of 3.3°C/min. During this period, 16 slm of He, 40 sccm of $SiCl_4$, and 1 slm of $SiF_4$ (the flow rate of a carrier He gas is 100 sccm) are introduced into the furnace. In this manner, a jacket having a relative refractive index difference of -0.36% is synthesized. An optical fiber preform is produced as described above. The preform obtained by subsequent elongation and flame polishing has an outer diameter of 40 mm and a core diameter of about 2.6 mm. This preform is drawn and, thereby, an optical fiber of Example 2 is produced.

The transmission loss of this optical fiber is 0.301 dB/km at a wavelength of 1,380 nm, including the transmission loss of 0.037 dB/km due to the OH group. The optical fiber has a transmission loss of 0.171 dB/km at a wavelength of 1,550 nm and the cutoff wavelength of 1.48 $\mu$m.

Comparative example 1

An optical fiber is produced in the same manner as in Example 1 except that a glass pipe 1 is prepared without using $SiCl_4$ in the step of heating the silica glass soot deposit body. The transmission loss of the optical fiber is 0.4 to 0.5 dB/km at a wavelength of 1,380 nm.

Example 3

A glass pipe having an inner diameter of 9 mm and an outer diameter of 117 mm is prepared (relative refractive index difference -0.33%) as in Example 1. A glass rod having an outer diameter of 7.5 mm is inserted into the resulting glass pipe, followed by simultaneously unifying and drawing them, so that an optical fiber is produced. The characteristics of the resulting optical fiber are similar to those in Example 1.

Example 4

An optical fiber is produced as in Example 1 except that $N_2$ is used in place of $SiCl_4$ with respect to the gas used in the step of heating the silica glass soot deposit body. The transmission loss of the resulting optical fiber is 0.305 dB/km at a wavelength of 1,380 nm, including the transmission loss of 0.041 dB/km due to the OH group. The transmission loss of the optical fiber at a wavelength of 1,550 nm is 0.173 dB/km, and the cutoff wavelength is 1.44 $\mu$m.

Example 5

An optical fiber is produced as in Example 1 except that $SiBr_4$ or $SiI_4$ is used in place of $SiCl_4$ with respect to the gas used in the step of heating the silica glass soot deposit body. The transmission loss of the resulting optical fiber is 0.303 dB/km at a wavelength of 1,380 nm, including the transmission loss of 0.039 dB/km due to the OH group. Furthermore, transmission loss at 1550 nm is 0.171 dB/km, and cutoff wavelength is 1.41 μm.

While this invention has been described in connection with what is presently considered to be the most practical and preferred embodiments, the invention is not limited to the disclosed embodiments, but on the contrary, is intended to cover various modifications and equivalent arrangements included within the spirit and scope of the appended Claims.

The entire disclosure of Japanese Patent Application No. 2003-429628 filed on December 25, 2003 including the specification, Claims, drawings, and summary are incorporated herein by reference in its entirety.

**Claims**

1. A method of manufacturing a fluorine doped silica glass article, the method comprising the steps of

   depositing silica glass soot on a starting substrate so as to produce a silica glass soot deposit body; and
   heating the silica glass soot deposit body in an atmosphere including at least a first gas containing fluorine atoms and a second gas having deoxidizing property and containing no fluorine atom nor hydrogen atom.

2. The method of manufacturing a fluorine doped silica glass article, according to Claim 1, wherein the second gas is a chloride of a nonmetallic element.

3. The method of manufacturing a fluorine doped silica glass article, according to Claim 1,
   wherein the first gas is one selected from the group consisting of $SiF_4$, $Si_2F_6$, chlorofluorocarbon, sulfur hexafluoride, $NF_3$, and $F_2$; and
   wherein the second gas is one selected from the group consisting of silicon halides other than silicon fluoride, $BCl_3$, $CCl_4$, $GeCl_4$, nitrogen, and sulfur.

4. The method of manufacturing a fluorine doped silica glass article, according to any one of Claims 1 to 3, wherein the total sum of concentrations of deoxidizing substances containing no fluorine atom nor hydrogen atom is 0.01 percent by volume or more and 10 percent by volume or less relative to the entire atmosphere.

5. The method of manufacturing a fluorine doped silica glass article, according to any one of Claims 1 to 3, wherein the first gas is $SiF_4$, the second gas is $SiCl_4$, and the concentration of $SiCl_4$ is 0.01 percent by volume or more and 10 percent by volume or less.

6. The method of manufacturing a fluorine doped silica glass article, according to Claim 5, wherein the concentration is 1 percent by volume or more and 10 percent by volume or less.

7. The method of manufacturing a fluorine doped silica glass article, according to any one of Claims 1 to 6, wherein the concentration of oxygen in the atmosphere is 20 ppm by volume or less.

8. The method of manufacturing a fluorine doped silica glass article, according to Claim 7, wherein the concentration is 10 ppm by volume or less.

9. The method of manufacturing a fluorine doped silica glass article, according to any one of Claims 1 to 8, wherein at least a part of the heating of the silica glass soot deposit body is performed in the atmosphere at 1,400°C or more.

10. A method of manufacturing an optical fiber preform, the method comprising the steps of:

    processing the fluorine doped silica glass article produced by the method of manufacturing a fluorine doped silica glass article, according to any one of Claims 1 to 9, into a glass pipe; and
    inserting a separately prepared glass rod into the glass pipe, followed by unifying them.

11. A method of manufacturing an optical fiber, the method comprising the step of:

drawing the optical fiber preform produced by the manufacturing method according to Claim 10.

**12.** A method of manufacturing an optical fiber, the method comprising the steps of:

processing the fluorine doped silica glass article produced by the method of manufacturing a fluorine doped silica glass article, according to any one of Claims 1 to 9, into a glass pipe; and
inserting a separately prepared glass rod into the glass pipe, followed by simultaneously unifying and drawing them.

**13.** An optical fiber comprising a core and a clad, the clad containing fluorine and the optical fiber having a transmission loss of 0.32 dB/km or less at a wavelength of 1,380 nm.

**14.** The optical fiber according to Claim 13, wherein the clad contains 0.5 percent by weight or more of fluorine and 0.1 percent by weight or more of chlorine.

FIG. 1

FIG. 2A

FIG.2B

FIG. 3A

FIG.3B

FIG. 4

FIG. 5A

FIG.5B

FIG. 6A

clean gas →

→ exhaust

FIG. 6B

Cl₂, SOCl₂etc →

→ exhaust

FIG. 6C

Cl₂, N₂, O₂ etc →

sealing

exhaust

FIG. 6D

Cl₂, N₂, O₂ etc →

exhaust

FIG. 7

EP 1 547 981 A2

FIG. 8

FIG. 9